# EUROPÄISCHE PATENTSCHRIFT

(11) **EP 3 965 035 B1**
(45) Veröffentlichungstag und Bekanntmachung des Hinweises auf die Patenterteilung: **26.02.2025**
(21) Anmeldenummer: 21190552.6
(22) Anmeldetag: 10.08.2021
(51) Int. Cl.: G06Q 10/06

(54) **BEREITSTELLUNG VON DATEN EINES KRAFTFAHRZEUGS**
PROVISION OF DATA OF A MOTOR VEHICLE
FOURNITURE DE DONNÉES D'UN VÉHICULE AUTOMOBILE

(30) Priorität: 02.09.2020 DE 102020122895
(43) Veröffentlichungstag der Anmeldung: 09.03.2022
(73) Patentinhaber: VOLKSWAGEN AKTIENGESELLSCHAFT, 38440 Wolfsburg (DE); AUDI AG, 85045 Ingolstadt (DE)
(72) Erfinder: MAX, Stephan, 38518 Gifhorn (DE); STINNER, Markus, 80798 München (DE)
(74) Vertreter: Hofstetter, Schurack & Partner

(56) Entgegenhaltungen:
- DE-B3- 102018 220 307
- US-A1- 2018 131 740
- US-B2- 10 694 322

## Beschreibung

Die vorliegende Erfindung betrifft ein Verfahren zur Bereitstellung von Daten eines Kraftfahrzeugs, wobei mittels des Kraftfahrzeugs ein erster Datensatz erzeugt wird, der erste Datensatz mittels einer Fahrzeugrecheneinheit des Kraftfahrzeugs anonymisiert wird und der anonymisierte erste Datensatz mittels der Fahrzeugrecheneinheit an ein Serversystem übermittelt wird. Die Erfindung betrifft ferner ein entsprechendes Serversystem zur Bereitstellung von Daten eines Kraftfahrzeugs und ein Kommunikationssystem.

Im Kontext vernetzter Kraftfahrzeuge werden Fahrzeugsysteme eingesetzt, die Daten von einem Kraftfahrzeug an ein Server-Backend senden. Dabei werden nutzerbezogene und nicht-nutzerbezogene Daten erhoben und übermittelt. Für viele Anwendungen werden jedoch lediglich nicht-nutzerbezogene Daten benötigt oder es werden nutzerbezogene Daten nur in einem geringen Umfang beziehungsweise in eingeschränkter oder anonymisierter Form benötigt. Beispielhafte Nutzungen von nicht-personenbezogenen Daten können dabei den Aufbau einer Wetterkarte mit Messdaten aus einer Fahrzeugflotte, den Aufbau einer Verkehrsflusskarte aus Bewegungsdaten der Fahrzeugflotte, die zentrale Warnung vor erkannten Gefahrenstellen, wie beispielsweise Glatteis oder Unfällen, und dergleichen beinhalten.

Als nutzerbezogene Daten können beispielsweise Kommunikationsdaten, Positionsdaten des Kraftfahrzeugs, entsprechende Zeitstempel oder Fahrzeugidentifikationsdaten erhoben und übermittelt werden. Diese Daten sind für die beschriebenen nicht-nutzerbezogenen Nutzungen gegebenenfalls unerheblich oder nur eingeschränkt erforderlich. Die nutzerbezogenen Daten werden jedoch im Sinne einer sicheren Kommunikation erhoben oder werden zum Teil benötigt, wie beispielsweise im Falle von Positionsdaten, um den erhobenen Datensatz mit einer Karte abzugleichen.

Bei bekannten Ansätzen werden alle nutzerbezogenen und nicht-nutzerbezogenen Daten an das Server-Backend übermittelt und möglichst frühzeitig im Server-Backend anonymisiert. Dies hat jedoch den Nachteil, dass die Datenübertragung selbst nicht anonym erfolgt beziehungsweise nutzerbezogene Daten über die entsprechende Luftschnittstelle übertragen werden müssen. Dies ist aus Gesichtspunkten der Datensicherheit sowie gegebenenfalls aus datenschutzrechtlichen Erwägungen heraus nachteilig.

Im Dokument DE 10 2014 005 589 A1 wird ein Verfahren zur anonymisierten Übertragung von kraftfahrzeugbezogenen Daten vorgeschlagen. Die kraftfahrzeugbezogenen Daten weisen dabei einen Identifikator auf, der autark generiert wird. Zur Anonymisierung der Daten wird auf einem Zentralrechner keine Zuordnung von Identifikator zu dem individuellen Kraftfahrzeug angelegt.

Dieses Verfahren ist jedoch anfällig für Missbrauch, da sowohl der Identifikator als auch die kraftfahrzeugbezogenen Daten auf dem zentralen Rechner vorliegen.

Im Dokument US 2003/0130893 A1 wird ein Verfahren zum Schutz persönlicher Daten beschrieben, die von einem Fahrzeug erzeugt oder erhalten werden. Dabei wird wenigstens ein Datenelement von einem mobilen System, beispielsweise dem Fahrzeug, akquiriert, das eine persönliche Identifizierungsinformation beinhaltet. Die persönliche Identifizierungsinformation wird von dem Datenelement entfernt und das Datenelement wird drahtlos an einen Empfänger übermittelt.

Dadurch wird jedoch lediglich eine formale Anonymisierung erzielt, da dem Datenelement auch nach der Entfernung der persönlichen Identifizierungsinformationen Informationen entnommen werden können, die jedenfalls eine ungefähre Zuordnung der Daten zu einem Benutzer beziehungsweise dem Fahrzeug erlauben können.

Document DE 10 2018 220307 B3 offenbart die Übertragung von in einem Fahrzeug anonymisierten Daten an ein Serversystem.

Vor diesem Hintergrund ist es eine Aufgabe der vorliegenden Erfindung, ein verbessertes Konzept zur Bereitstellen von Daten eines Kraftfahrzeugs anzugeben, durch das nutzerbezogene Daten mit höherer Zuverlässigkeit geschützt werden können.

Diese Aufgabe wird gelöst durch den jeweiligen Gegenstand der unabhängigen Ansprüche. Vorteilhafte Ausgestaltung und bevorzugte Ausführungsformen sind Gegenstand der abhängigen und nebengeordneten Ansprüche.

Das verbesserte Konzept beruht auf der Idee, basierend auf einem anonymisierten Datensatz, der von dem Kraftfahrzeug an ein Serversystem übermittelt wurde, einen Anonymisierungsgrad zu bestimmen und abhängig davon einen Parametersatz zur Anonymisierung anzupassen und an das Kraftfahrzeug zu übermitteln.

Gemäß dem verbesserten Konzept wird ein Verfahren zur Bereitstellung von Daten eines Kraftfahrzeugs angegeben, wobei mittels des Kraftfahrzeugs ein erster Datensatz erzeugt wird und der erste Datensatz mittels einer Fahrzeugrecheneinheit des Kraftfahrzeugs anonymisiert wird und der anonymisierte erste Datensatz mittels der Fahrzeugrecheneinheit an ein Serversystem übermittelt wird, insbesondere drahtlos. Die Anonymisierung wird dabei mittels der Fahrzeugrecheneinheit basierend auf einem vorgegebenen Parametersatz durchgeführt. Mittels des Serversystems wird basierend auf dem übermittelten anonymisierten Datensatz ein durch die Anonymisierung erreichter Anonymisierungsgrad bestimmt. Mittels des Serversystems wird basierend auf dem Anonymisierungsgrad, und insbesondere basierend auf dem Parametersatz, ein angepasster Parametersatz erzeugt und an die Fahrzeugrecheneinheit übermittelt, insbesondere drahtlos übermittelt.

Der mittels des Kraftfahrzeugs erzeugte erste Datensatz kann beispielsweise durch eines oder mehrere Sensorsysteme des Kraftfahrzeugs und/oder durch die Recheneinheit erzeugt werden. Der Datensatz kann dabei insbesondere nutzerbezogene oder nutzerbeziehbare Daten beinhalten sowie Daten ohne Nutzerbezug. Unter nutzerbezogenen Daten können dabei beispielsweise Daten verstanden werden, die Rückschlüsse auf die Identität des Kraftfahrzeugs oder eines Nutzers, beispielsweise eines Halters, des Kraftfahrzeugs zulassen oder zulassen können. Die nutzerbezogenen Daten können also insbesondere kraftfahrzeugbezogene Daten und/oder personenbezogene enthalten. Die nutzerbezogenen Daten können beispielsweise eine IP-Adresse der Fahrzeugrecheneinheit beziehungsweise einer Kommunikationsschnittstelle der Fahrzeugrecheneinheit, eine Netzwerkkartenidentifikationsnummer der Fahrzeugrecheneinheit, sonstige Geräteidentifikationsnummern von Komponenten der Fahrzeugrecheneinheit oder des Kraftfahrzeugs, eine Fahrzeug-Identifizierungsnummer, FIN (englisch: "Vehicle Identification Number", VIN), eine Benutzeridentifikationsnummer, eine Kundennummer des Benutzers, und so weiter beinhalten. Die nutzerbezogenen Daten können auch Daten betreffend eine oder mehrere Positionen des Kraftfahrzeugs, beispielsweise eine mittels des Kraftfahrzeugs gefahrene oder geplante Route, beinhalten und/oder Zeitstempel betreffend Sensordaten oder Positionsdaten.

Die Daten ohne Nutzerbezug können beispielsweise Messdaten, Rohdaten oder vorverarbeitete Mess- beziehungsweise Rohdaten des Sensorsystems, Wetterdaten der Umgebung des Kraftfahrzeugs oder Betriebsdaten des Kraftfahrzeugs, beispielsweise eine Kraftfahrzeuggeschwindigkeit oder Aktivitätsinformationen betreffend Komponenten des Kraftfahrzeugs, wie beispielsweise eine Heizvorrichtung, eine Klimaanlage, Scheibenwischer oder eine Beleuchtungseinrichtung des Kraftfahrzeugs beinhalten.

Das Anonymisieren des ersten Datensatzes kann beispielsweise das vollständige oder teilweise Entfernen beziehungsweise Löschen der nutzerbezogenen Daten, das Modifizieren der nutzerbezogenen Daten und/oder das Verschleiern der nutzerbezogenen Daten, beispielsweise von Positionsdaten und Zeitpunkten oder Zeiträumen, beinhalten. Enthält der erste Datensatz beispielsweise Positionsverläufe oder Routen, so kann die Fahrzeugrecheneinheit zum Anonymisieren Teile der Route, beispielsweise einen Startbereich und/oder Zielbereich der Route, entfernen. Durch den Parametersatz ist dabei insbesondere vorgegeben, welche Teile des ersten Datensatzes entfernt, modifiziert oder verschleiert werden beziehungsweise wie die Modifikation oder Verschleierung durchgeführt wird beziehungsweise wie stark die Verschleierung oder die Modifikation ist.

Der Anonymisierungsgrad kann dann als Maß für einen Aufwand, beispielsweise einen Rechenaufwand, angesehen werden, der erforderlich ist, um den anonymisierten ersten Datensatz oder Teile davon dem Kraftfahrzeug oder dem Benutzer des Kraftfahrzeugs zuzuordnen, also eine Re-Identifikation durchzuführen. Der Parametersatz hat dabei insbesondere einen direkten Einfluss auf den erreichten Anonymisierungsgrad. Der vorgegebene Parametersatz liegt dabei insbesondere auch auf dem Serversystem vor beziehungsweise wird beispielsweise von dem Serversystem vorgegeben.

Bei dem Serversystem handelt es sich insbesondere um ein extern zu dem Kraftfahrzeug angeordnetes und von dem Kraftfahrzeug unabhängiges System, das eine oder mehrere Serverrecheneinheiten aufweist. Insbesondere kann das Serversystem mehrere voneinander unabhängige und in einer drahtlosen Kommunikationsverbindung miteinander stehende, gegebenenfalls räumlich verteilte Serverrecheneinheiten beinhalten.

Durch das Verfahren nach dem verbesserten Konzept wird also durch die Bestimmung des Anonymisierungsgrads und gegebenenfalls die Anpassung des Parametersatzes eine Qualitätskontrolle der in dem Kraftfahrzeug durchgeführten Anonymisierung des ersten Datensatzes realisiert. Dadurch, dass die Anonymisierung im Kraftfahrzeug beziehungsweise durch das Kraftfahrzeug erfolgt, werden weniger personenbezogene oder kraftfahrzeugbezogene Daten über die Luftschnittstelle zwischen Fahrzeugrecheneinheit und Serversystem übertragen, so dass bereits dadurch ein Missbrauchsrisiko reduziert wird. Der für die Anonymisierung erforderliche Aufwand, um einen gewünschten Anonymisierungsgrad zu erreichen, kann jedoch je nach Situation unterschiedlich sein. Befinden sich beispielsweise in einem bestimmten räumlichen und/oder zeitlichen Bereich sehr viele Kraftfahrzeuge, von denen entsprechende Daten erhoben werden, so kann beispielsweise bereits ein relativ geringer Aufwand bei der Anonymisierung dazu führen, dass der anonymisierte erste Datensatz nur noch mit erheblichem Aufwand dem tatsächlich erzeugenden Kraftfahrzeug zugeordnet werden kann. Sind dagegen nur sehr wenige Daten liefernde Kraftfahrzeuge in dem räumlichen und/oder zeitlichen Bereich vorhanden, so ist gegebenenfalls ein höherer Aufwand, beispielsweise eine stärkere Verschleierung oder eine umfassendere Entfernung von nutzerbeziehbaren Datenteilen, erforderlich, um den gewünschten Anonymisierungsgrad zu erreichen. Insbesondere kann durch die Anonymisierung eine gewisse Gruppen- oder Flottenanonymität erreicht werden, so dass der anonymisierte erste Datensatz zwar einer Fahrzeuggruppe einer bestimmten Größe zugeordnet werden kann, jedoch nicht einem konkreten Kraftfahrzeug der Gruppe oder Flotte. Je nach Größe der Gruppe kann daher der Anonymisierungsgrad variieren, wobei der Anonymisierungsgrad auch insbesondere durch die Größe der Gruppe gegeben sein kann. Die Größe der Gruppe kann anhand des Parametersatzes beeinflusst werden.

Das verbesserte Konzept erlaubt es also, den Anonymisierungsaufwand an die konkret vorliegende Situation anzupassen und dadurch eine höhere Zuverlässigkeit bei der Anonymisierung beziehungsweise beim Erreichen des gewünschten Anonymisierungsgrads zu erzielen und dabei den Aufwand zur Anonymisierung möglichst gering zu halten.

Gemäß zumindest einer Ausführungsform des Verfahrens nach dem verbesserten Konzept wird der erste Datensatz mittels der Fahrzeugrecheneinheit und/oder des Sensorsystems des Kraftfahrzeugs erzeugt, wobei das Sensorsystem insbesondere eines oder mehrere Umfeldsensorsysteme beinhaltet.

Ein Umfeldsensorsystem kann hier und im Folgenden als Sensorsystem verstanden werden, das dazu in der Lage ist, Sensordaten oder Sensorsignale zu erzeugen, welche eine Umgebung des Kraftfahrzeugs abbilden, darstellen oder wiedergeben. Insbesondere können Kameras, Lidarsysteme, Radarsysteme und Ultraschallsensorsysteme als Umfeldsensorsysteme angesehen werden.

Der erste Datensatz kann auch Positionsdaten, die mittels eines digitalen Kartensystems des Kraftfahrzeugs und/oder mittels eines Empfängers für ein globales Navigationssatellitensystem, GNSS, des Kraftfahrzeugs erzeugt werden, beinhalten.

Gemäß zumindest einer Ausführungsform wird der anonymisierte erste Datensatz und/oder werden davon abhängige Daten mittels des Serversystems zur Nutzung bereitgestellt. Die Nutzung kann dabei durch das Serversystem selbst erfolgen oder durch eine weitere Entität, die Zugriff auf den anonymisierten ersten Datensatz beziehungsweise die davon abhängigen Daten hat, beispielsweise eine weitere Recheneinheit oder eine weitere Person.

Gemäß zumindest einer Ausführungsform wird mittels des Serversystems basierend auf dem anonymisierten ersten Datensatz eine Gruppengröße bestimmt, welche einer Anzahl von Kraftfahrzeugen entspricht, auf die der anonymisierte Datensatz bezogen werden kann. Der Anonymisierungsgrad wird abhängig von der Gruppengröße bestimmt oder entspricht der Gruppengröße.

Insbesondere durch die Verschleierung von Orts- und/oder Zeitinformationen des ersten Datensatzes zur Anonymisierung kann eine Gruppenanonymität erzeugt werden, da die entsprechenden anonymisierten ersten Daten dann auf eine ganze Gruppe von Kraftfahrzeugen bezogen werden kann, jedoch nicht bestimmt werden kann, welches Kraftfahrzeug der Gruppe tatsächlich den ersten Datensatz erzeugt hat. Je größer die Gruppe ist, desto sicherer ist der anonymisierte erste Datensatz vor Missbrauch, da mit der Anzahl von Kraftfahrzeugen der Gruppe der Aufwand steigt, den ersten Datensatz einem der Kraftfahrzeuge zuzuordnen.

Durch die Anpassung des Parametersatzes abhängig von der Gruppengröße kann daher die durch die Anonymisierung erreichte Gruppengröße angepasst werden, um den erwünschten Anonymisierungsgrad zu erreichen, wobei der gewünschte Anonymisierungsgrad beispielsweise einen vorgegebenen Grenzwert für die Gruppengröße beziehungsweise für die Anzahl von Kraftfahrzeugen beinhaltet oder diesem entspricht.

Gemäß zumindest einer Ausführungsform wird mittels des Kraftfahrzeugs ein zweiter Datensatz erzeugt, und der zweite Datensatz wird mittels der Fahrzeugrecheneinheit basierend auf dem angepassten Parametersatz anonymisiert. Der anonymisierte zweite Datensatz wird mittels der Fahrzeugrecheneinheit an das Serversystem übermittelt.

Die Ausführungen bezüglich des ersten Datensatzes und des Parametersatzes gelten analog für den zweiten Datensatz und den angepassten Parametersatz. Nachdem der Parametersatz angepasst wurde, ist zu erwarten, dass ein Anonymisierungsgrad, der durch die Anonymisierung des zweiten Datensatzes basierend auf dem angepassten Parametersatz erreicht wird, erhöht ist. Die Datensicherheit betreffend den zweiten Datensatz beziehungsweise weitere analog erzeugte und anonymisierte Datensätze kann dadurch verbessert werden.

Gemäß zumindest einer Ausführungsform ist das Kraftfahrzeug Teil einer Kraftfahrzeugflotte, die eines oder mehrere weitere Kraftfahrzeuge enthält, und der angepasste Parametersatz wird mittels des Serversystems an eine jeweilige weitere Fahrzeugrecheneinheit jedes weiteren Kraftfahrzeugs der Kraftfahrzeugflotte übermittelt.

Insbesondere kann dadurch erreicht werden, dass alle Kraftfahrzeuge der Kraftfahrzeugflotte entsprechende Datensätze jeweils basierend auf demselben angepassten Parametersatz anonymisieren können. Dadurch kann der Parametersatz beziehungsweise der entsprechende Anonymisierungsgrad proaktiv angepasst werden und somit können die Zuverlässigkeit und Datensicherheit für die gesamte Kraftfahrzeugflotte erhöht werden.

Gemäß zumindest einer Ausführungsform wird mittels jedes weiteren Kraftfahrzeugs der Kraftfahrzeugflotte ein weiterer Datensatz erzeugt und der jeweilige weitere Datensatz wird mittels der jeweiligen weiteren Fahrzeugrecheneinheit basierend auf dem angepassten Parametersatz anonymisiert. Der jeweilige anonymisierte weitere Datensatz wird mittels der jeweiligen weiteren Fahrzeugrecheneinheit an das Serversystem übermittelt.

Die dementsprechend übermittelten weiteren anonymisierten Datensätze können analog zu dem übermittelten anonymisierten ersten Datensatz weiterverarbeitet oder zur Nutzung bereitgestellt werden.

Gemäß zumindest einer Ausführungsform werden mittels der Fahrzeugrecheneinheit weitere nutzerbezogene Daten zusammen mit dem anonymisierten ersten Datensatz an das Serversystem übermittelt, und die übermittelten weiteren nutzerbezogenen Daten werden mittels des Serversystems gelöscht.

Die weiteren nutzerbezogenen Daten können dabei insbesondere Daten beinhalten, die zur korrekten und sicheren Übertragung des anonymisierten ersten Datensatzes notwendigerweise übermittelt werden müssen, beispielsweise eine IP-Adresse der Fahrzeugrecheneinheit und/oder eine Kundenidentifikationsnummer. Das Serversystem löscht diese weiteren nutzerbezogenen Daten, um so eine mögliche Re-Identifizierung des Kraftfahrzeugs oder des Benutzers basierend auf dem anonymisierten ersten Datensatz zu verhindern. Insbesondere löscht das Serversystem außer dem anonymisierten ersten Datensatz alle von der Fahrzeugrecheneinheit zusammen mit dem anonymisierten ersten Datensatz übermittelten Daten.

Gemäß zumindest einer Ausführungsform beinhalten die weiteren nutzerbezogenen Daten die IP-Adresse der Fahrzeugrecheneinheit und/oder eine der Fahrzeugrecheneinheit zugeordnete Kennung.

Die der Fahrzeugrecheneinheit zugeordnete Kennung kann dabei eine Kundenidentifikationsnummer oder eine Fahrzeug-Identifizierungsnummer beinhalten.

Gemäß zumindest einer Ausführungsform werden die weiteren nutzerbezogenen Daten und der anonymisierte erste Datensatz mittels der Fahrzeugrecheneinheit an eine erste Serverrecheneinheit des Serversystems übermittelt, und die übermittelten nutzerbezogenen Daten werden mittels der ersten Serverrecheneinheit gelöscht. Der anonymisierte erste Datensatz wird mittels der ersten Serverrecheneinheit, insbesondere drahtlos, an eine zweite Serverrecheneinheit des Serversystems übermittelt, wobei die zweite Serverrecheneinheit von der ersten Serverrecheneinheit insbesondere physisch und/oder räumlich getrennt ist.

Durch die Trennung der ersten von der zweiten Serverrecheneinheit kann die Datensicherheit weiter erhöht werden, da die zweite Serverrecheneinheit zu keinem Zeitpunkt über die weiteren nutzerbezogenen Daten verfügt. Eine potentiell missbräuchliche Nutzung des anonymisierten ersten Datensatzes würde also einen unberechtigten Zugriff auf zwei unterschiedliche, voneinander unabhängige Serverrecheneinheiten erfordern. Die erste Serverrecheneinheit kann dabei als Zwischen-Backend angesehen werden, welche den anonymisierten ersten Datensatz an die zweite Serverrecheneinheit als Ziel-Backend weiterleitet.

Gemäß zumindest einer Ausführungsform wird der Anonymisierungsgrad mittels der zweiten Serverrecheneinheit bestimmt, und der angepasste Parametersatz wird mittels der zweiten Serverrecheneinheit erzeugt und an die Fahrzeugrecheneinheit übermittelt.

Gemäß zumindest einer Ausführungsform wird der anonymisierte erste Datensatz vor dessen Übermittlung an das Serversystem mittels der Fahrzeugrecheneinheit verschlüsselt. Der verschlüsselte erste anonymisierte erste Datensatz wird mittels des Serversystems, insbesondere mittels der zweiten Serverrecheneinheit, nach dem Löschen der weiteren nutzerbezogenen Daten entschlüsselt.

Dadurch wird sichergestellt, dass der erste anonymisierte Datensatz nur in verschlüsselter Form gleichzeitig mit den weiteren nutzerbezogenen Daten auf dem Serversystem vorliegt. Dadurch wird die Datensicherheit weiter erhöht.

Gemäß zumindest einer Ausführungsform wird mittels des Serversystems, insbesondere mittels der zweiten Serverrecheneinheit, vor der Entschlüsselung ein Erfolg des Löschens der weiteren nutzerbezogenen Daten überprüft, und die Entschlüsselung wird abhängig von einem Ergebnis der Überprüfung durchgeführt.

Insbesondere wird die Entschlüsselung nur dann oder genau dann durchgeführt, wenn gemäß dem Ergebnis der Überprüfung das Löschen der weiteren nutzerbezogenen Daten erfolgreich war. Dadurch kann die Wahrscheinlichkeit dafür reduziert werden, dass ein Teil der weiteren nutzerbezogenen Daten aus unvorhersehbaren Gründen gleichzeitig mit dem entschlüsselten anonymisierten ersten Datensatz auf dem Serversystem vorliegt.

Gemäß zumindest einer Ausführungsform enthält der vorgegebene Parametersatz eine Verzögerungsdauer und der anonymisierte erste Datensatz wird mittels der Fahrzeugrecheneinheit gemäß der Verzögerungsdauer zeitverzögert an das Serversystem übermittelt.

Mit anderen Worten steht der anonymisierte erste Datensatz, gegebenenfalls verschlüsselt, zu einem bestimmten Zeitpunkt zur Übermittlung an das Serversystem bereit, die tatsächliche Übermittlung erfolgt bezüglich dieses Zeitpunkts jedoch gemäß der Verzögerungsdauer zeitverzögert. Dadurch wird eine Zuordenbarkeit des anonymisierten ersten Datensatzes zu dem Kraftfahrzeug beziehungsweise zu dessen Benutzer weiter erschwert beziehungsweise die Gruppengröße kann weiter erhöht werden. Dadurch werden die Zuverlässigkeit des Verfahrens beziehungsweise die Datensicherheit weiter erhöht.

Die Anpassung des Parametersatzes beziehungsweise das Erzeugen des angepassten Parametersatzes beinhaltet insbesondere das Anpassen der Verzögerungsdauer. Der zweite Datensatz wird insbesondere gemäß der angepassten Verzögerungsdauer zeitverzögert an das Serversystem übermittelt.

Gemäß dem verbesserten Konzept wird auch ein Serversystem zur Bereitstellung von Daten eines Kraftfahrzeugs angegeben, wobei das Serversystem wenigstens eine Serverrecheneinheit aufweist, die dazu eingerichtet ist, von dem Kraftfahrzeug beziehungsweise einer Fahrzeugrecheneinheit des Kraftfahrzeugs, einen anonymisierten ersten Datensatz, der insbesondere basierend auf einem vorgegebenen Parametersatz anonymisiert ist, zu erhalten. Die wenigstens eine Serverrecheneinheit ist dazu eingerichtet, basierend auf dem anonymisierten ersten Datensatz einen durch die Anonymisierung, insbesondere basierend auf dem Parametersatz, erreichten Anonymisierungsgrad zu bestimmen und basierend auf dem Anonymisierungsgrad, und insbesondere dem Parametersatz, einen angepassten Parametersatz zu erzeugen und an das Kraftfahrzeug beziehungsweise die Fahrzeugrecheneinheit zu übermitteln.

Gemäß zumindest einer Ausführungsform des Serversystems beinhaltet die wenigstens eine Serverrecheneinheit eine erste Serverrecheneinheit und eine zweite Serverrecheneinheit. Die erste Serverrecheneinheit ist dazu eingerichtet, zusammen mit dem anonymisierten ersten Datensatz nutzerbezogene Daten von dem Kraftfahrzeug beziehungsweise der Fahrzeugrecheneinheit zu erhalten, die übermittelten nutzerbezogenen Daten zu löschen und den anonymisierten ersten Datensatz an die zweite Serverrecheneinheit zu übermitteln.

Weitere Ausführungsformen des Serversystems nach dem verbesserten Konzept folgen direkt aus den verschiedenen Ausführungsformen des Verfahrens nach dem verbesserten Konzept und umgekehrt.

Gemäß dem verbesserten Konzept wird auch ein Kommunikationssystem angegeben, das ein Serversystem nach dem verbesserten Konzept aufweist sowie eine Fahrzeugrecheneinheit für das Kraftfahrzeug. Die Fahrzeugrecheneinheit ist dazu eingerichtet, einen durch das Kraftfahrzeug erzeugten ersten Datensatz basierend auf einem vorgegeben Parametersatz zu anonymisieren, um den anonymisierten ersten Datensatz zu erzeugen und den anonymisierten ersten Datensatz an das Serversystem zu übermitteln.

Weitere Ausführungsformen des Kommunikationssystems nach dem verbesserten Konzept folgen direkt aus den verschiedenen Ausführungsformen des Verfahrens nach dem verbesserten Konzept und umgekehrt. Insbesondere ist ein Kommunikationssystem nach dem verbesserten Konzept dazu eingerichtet, ein Verfahren nach dem verbesserten Konzept durchzuführen oder es führt ein solches Verfahren durch.

Die Erfindung umfasst auch die Kombinationen der Merkmale der beschriebenen Ausführungsformen.

Im Folgenden werden Ausführungsbeispiele der Erfindung beschrieben. In den Figuren zeigen:
- Fig. 1: eine schematische Darstellung einer beispielhaften Ausführungsform eines Kommunikationssystems nach dem verbesserten Konzept;
- Fig. 2: ein Ablaufdiagramm einer beispielhaften Ausführungsform eines Verfahrens nach dem verbesserten Konzept; und
- Fig. 3: ein Ablaufdiagramm einer weiteren beispielhaften Ausführungsform eines Verfahrens nach dem verbesserten Konzept.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

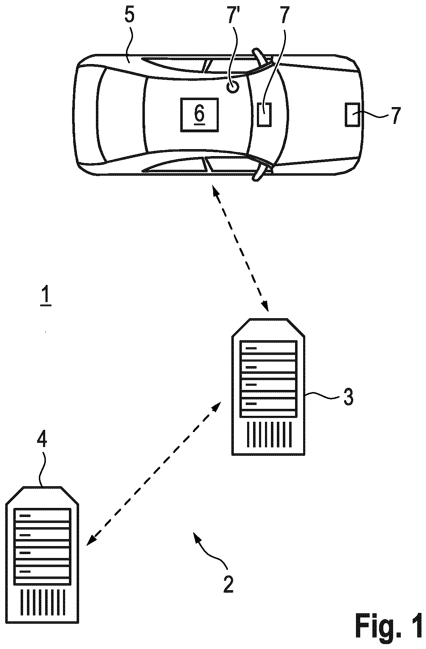

In Fig. 1 ist eine schematische Darstellung einer beispielhaften Ausführungsform eines Kommunikationssystems 1 nach dem verbesserten Konzept dargestellt, das ein Serversystem 2 und eine Fahrzeugrecheneinheit 6 eines Kraftfahrzeugs 5 beinhaltet. Das Kraftfahrzeug 5 kann in verschiedenen Ausführungsformen als Teil des Kommunikationssystems 1 angesehen werden. Das Kraftfahrzeug 5 weist insbesondere eines oder mehrere Sensorsysteme 7, beispielsweise Umfeldsensorsysteme, Geschwindigkeitssensoren, Temperatursensoren und so weiter, auf sowie einen GNSS-Empfänger 7', beispielsweise einen GPS-, GLONASS-, Galileo- und/oder Beidou-Empfänger. Das Serversystem 2 enthält wenigstens eine Serverrecheneinheit 3, 4. In verschiedenen Ausgestaltungsformen enthält das Serversystem 2 eine erste Serverrecheneinheit 3 sowie eine zweite Serverrecheneinheit 4, die von der ersten Serverrecheneinheit 3 physisch und räumlich getrennt ist.

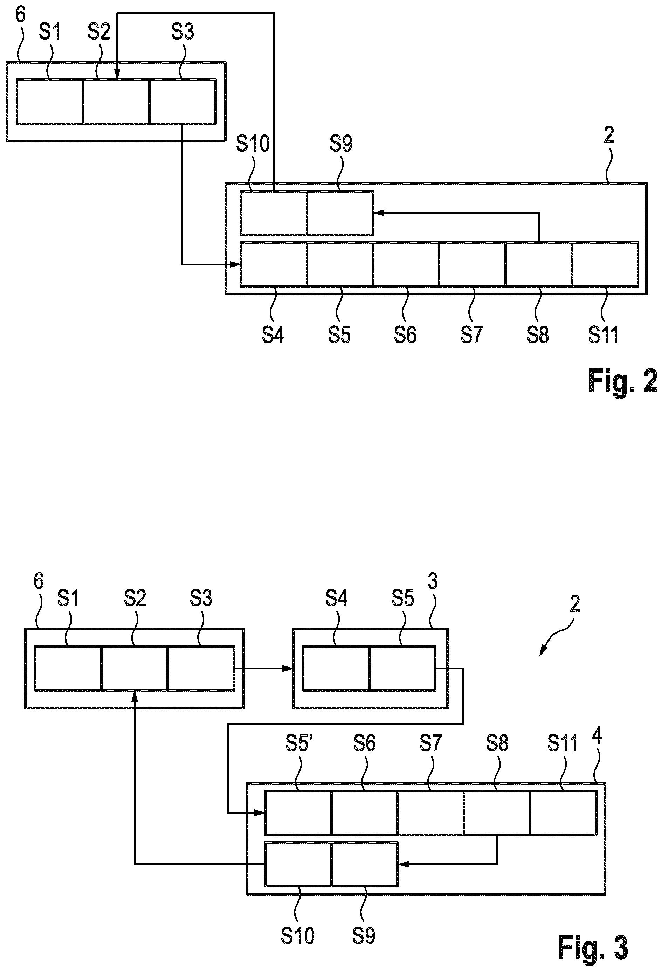

Die Funktionsweise des Kommunikationssystems 1 wird im Folgenden anhand beispielhafter Ausführungsformen eines Verfahrens zur Bereitstellung von Daten des Kraftfahrzeugs 5 gemäß dem verbesserten Konzept näher erläutert, insbesondere unter Bezugnahme auf die Figuren Fig. 2 und Fig. 3.

In Fig. 2 ist ein Ablaufdiagramm einer beispielhaften Ausführungsform eines Verfahrens nach dem verbesserten Konzept schematisch dargestellt. Ebenfalls schematisch dargestellt sind das Serversystem 2 sowie die Fahrzeugrecheneinheit 6.

In einem ersten Verfahrensschritt S1 werden mittels des Kraftfahrzeugs 5, beispielsweise anhand der Sensorsysteme 7 und/oder des GNSS-Empfängers 7' sowie gegebenenfalls durch weitere Komponenten des Kraftfahrzeugs 5 und/oder mittels der Fahrzeugrecheneinheit 6 Daten erhoben, die sowohl nicht-nutzerbezogene Daten, wie beispielsweise Umfeldsensordaten, Wetterdaten oder Betriebsdaten des Kraftfahrzeugs beinhalten, beispielsweise eine Kraftfahrzeuggeschwindigkeit, sowie nutzerbezogene oder nutzerbeziehbare Daten, wie beispielsweise Kommunikationsdaten, Positionsdaten des Kraftfahrzeugs 5, Zeitstempel betreffend die Umfeldsensordaten oder die Positionsdaten, Fahrzeugidentifikationsdaten, wie eine FIN und so weiter.

Im Schritt S2 werden die erhobenen Daten mittels der Fahrzeugrecheneinheit 6 anonymisiert. Dazu können beispielsweise Teile der erhobenen Daten entfernt oder gelöscht werden, wie beispielsweise der Name eines Benutzers, Informationen betreffend ein amtliches Kennzeichen des Kraftfahrzeugs 5 oder sonstige, unmittelbar zur Identifizierung des Benutzers oder des Kraftfahrzeugs 5 geeignete Daten. Im Rahmen der Anonymisierung können auch Datenteile entfernt werden, die indirekt zu einer Identifizierung des Benutzers oder Kraftfahrzeugs herangezogen werden können, also pseudonyme Daten. Beispielsweise können Start- und/oder Zielpositionen von mittels des Kraftfahrzeugs 5 zurückgelegten oder geplanten Routen entfernt werden.

Zudem kann es das Anonymisieren beinhalten, Positionsdaten des Kraftfahrzeugs 5, die beispielsweise anhand von Karteninformationen oder von mittels des GNSS-Empfängers 7' empfangenen Signalen erzeugt oder bestimmt wurden, zu verschleiern und/oder entsprechende Zeitpunkte, zu denen sich das Kraftfahrzeug 5 an den entsprechenden Positionen befand, zu verschleiern. Die Verschleierung kann dabei durch künstliches Hinzufügen von Toleranzen oder Fehlern erfolgen oder durch zeitlich verzögertes Verarbeiten oder Hochladen der Daten an das Serversystem 2. Auch Zeitstempel der Positionsdaten können entsprechend entfernt werden.

Die konkreten Maßnahmen zur Anonymisierung hängen letztlich davon ab, für welchen Zweck die Daten des Kraftfahrzeugs 5 verwendet werden sollen. Sollen die Daten beispielsweise dazu dienen, eine Verkehrsflusskarte oder eine Wetterkarte oder dergleichen zu erstellen, so sind, jedenfalls in gewissem Umfang, Positionsdaten und gegebenenfalls auch Zeitdaten oder zeitliche Informationen erforderlich. Die Anonymisierung erfolgt daher basierend auf einem vorgegebenen Parametersatz, der festlegt, welche Teile der Daten entfernt beziehungsweise verschleiert werden sollen und wie stark die Verschleierung durchgeführt werden soll. Den Parametersatz kann die Fahrzeugrecheneinheit 6 beispielsweise von dem Serversystem 2 erhalten.

Durch die Anonymisierung wird insbesondere eine Gruppenanonymisierung erreicht, so dass das Kraftfahrzeug 5 in einer Kraftfahrzeugflotte mit weiteren Kraftfahrzeugen nicht mehr eindeutig identifizierbar ist.

Im Schritt S3 werden die anonymisierten Daten mittels der Fahrzeugrecheneinheit 6 verschlüsselt. Im Schritt S4 werden die verschlüsselten anonymisierten Daten an das Serversystem 2 übermittelt. Neben den anonymisierten Daten werden dabei insbesondere auch weitere nutzerbezogene Daten übermittelt, insbesondere eine IP-Adresse der Fahrzeugrecheneinheit 6.

Im Schritt S5 werden diese weiteren nutzerbezogenen Daten mittels des Serversystems 2 daher gelöscht. Die Löschung erfolgt dabei insbesondere, ohne dass die verschlüsselten anonymisierten Daten vorher entschlüsselt werden. Im optionalen Schritt S6 kann der Erfolg der Löschung überprüft werden und nur wenn festgestellt wird, dass alle nutzerbezogenen Daten, die zusammen mit den anonymisierten Daten übermittelt wurden, entfernt wurden, werden die Daten weitergegeben beziehungsweise weiterverarbeitet. Nach der Löschung der nutzerbezogenen Daten werden die verschlüsselten anonymisierten Daten in Schritt S7 durch das Serversystem 2 entschlüsselt.

In Schritt S8 kann eine Qualitätsüberprüfung der Anonymisierung durchgeführt werden. Dazu kann mittels des Serversystems 2 insbesondere ein durch die Anonymisierung erreichter Anonymisierungsgrad bestimmt werden und beispielsweise mit einem vorgegebenen Grenzwert für den Anonymisierungsgrad verglichen werden. Abhängig von einem Ergebnis des Vergleichs kann in Schritt S9 der Parametersatz zur Anonymisierung der Daten angepasst werden. Dadurch kann die Effektivität oder Wirksamkeit der Anonymisierung verbessert oder schrittweise verbessert werden.

In Schritt S10 wird der angepasste Parametersatz an die Fahrzeugrecheneinheit 6 beziehungsweise an entsprechende Fahrzeugrecheneinheiten der weiteren Kraftfahrzeuge der Kraftfahrzeugflotte übermittelt. Für weitere Anonymisierungen kann die Fahrzeugrecheneinheit 6 dann den angepassten Parametersatz verwenden. In Schritt S11 werden die anonymisierten Daten mittels des Serversystems 2 ihrer beabsichtigten Nutzung zugeführt beziehungsweise zur Nutzung durch Dritte bereitgestellt.

In verschiedenen Ausführungsformen werden die Verschlüsselung in Schritt S3 und die Entschlüsselung in Schritt S7 nicht durchgeführt.

In Fig. 3 ist ein Ablaufdiagramm einer weiteren beispielhaften Ausführungsform eines Verfahrens nach dem verbesserten Konzept dargestellt. Das Verfahren gemäß Fig. 3 entspricht weitgehend dem Verfahren bezüglich Fig. 2. In der Ausführungsform des Verfahrens gemäß Fig. 3 weist das Serversystem 2 jedoch die erste Serverrecheneinheit 3 sowie die zweite Serverrecheneinheit 4 auf.

Die anonymisierten und gegebenenfalls verschlüsselten Daten sowie die weiteren nutzerbezogenen Daten werden in Schritt S4 daher von der Fahrzeugrecheneinheit 6 an die erste Serverrecheneinheit 3 übermittelt. Der Schritt S5 zur Löschung der weiteren nutzerbezogenen Daten wird durch die erste Serverrecheneinheit 3 durchgeführt, und in Schritt S5' werden die anonymisierten Daten ohne jegliche nutzerbezogenen weiteren Daten von der Serverrecheneinheit 3 an die zweite Serverrecheneinheit 4 übermittelt. Die Schritte S6 bis S11 entsprechen den bezüglich Fig. 2 erläuterten Schritten und werden durch die zweite Serverrecheneinheit 4 ausgeführt.

Durch die physische und organisatorische Trennung der Serverrecheneinheiten 3 und 4 kann verhindert werden, dass ein möglicher Angreifer Zugang sowohl zu den entschlüsselten anonymisierten Daten als auch zu den weiteren nutzerbezogenen Daten erhält.

Wie insbesondere bezüglich der Figuren erläutert, erlaubt es das verbesserte Konzept, die Datensicherheit personenbezogener oder kraftfahrzeugbezogener Daten bei der Nutzung von Daten eines Kraftfahrzeugs zu verbessern und die Zuverlässigkeit des Datenschutzes zu erhöhen.

### Bezugszeichenliste

- 1: Kommunikationssystem
- 2: Serversystem
- 3,4: Serverrecheneinheiten
- 5: Kraftfahrzeug
- 6: Fahrzeugrecheneinheit
- 7: Sensorsysteme
- 7': GNSS-Empfänger
- S1 bis S11: Verfahrensschritte

## Patentansprüche

1. Verfahren zur Bereitstellung von Daten eines Kraftfahrzeugs (5), wobei
- mittels des Kraftfahrzeugs (5) ein erster Datensatz erzeugt wird und der erste Datensatz mittels einer Fahrzeugrecheneinheit (6) des Kraftfahrzeugs (5) anonymisiert wird; und
- der anonymisierte erste Datensatz mittels der Fahrzeugrecheneinheit (6) an ein Serversystem (2) übermittelt wird,
- die Anonymisierung basierend auf einem vorgegebenen Parametersatz durchgeführt wird,
**dadurch gekennzeichnet, dass**
- mittels des Serversystems (2) basierend auf dem anonymisierten ersten Datensatz ein durch die Anonymisierung erreichter Anonymisierungsgrad bestimmt wird; und
- mittels des Serversystems (2) basierend auf dem Anonymisierungsgrad ein angepasster Parametersatz erzeugt und an die Fahrzeugrecheneinheit (6) übermittelt wird.

2. Verfahren nach Anspruch 1,
**dadurch gekennzeichnet, dass**
- mittels der Fahrzeugrecheneinheit (6) nutzerbezogene Daten zusammen mit dem anonymisierten ersten Datensatz an das Serversystem (2) übermittelt werden; und
- die übermittelten nutzerbezogenen Daten mittels des Serversystems (2) gelöscht werden.

3. Verfahren nach Anspruch 2,
**dadurch gekennzeichnet, dass**
die nutzerbezogenen Daten eine IP-Adresse der Fahrzeugrecheneinheit (6) und/oder eine der Fahrzeugrecheneinheit (6) zugeordnete Kennung beinhalten.

4. Verfahren nach einem der Ansprüche 2 oder 3,
**dadurch gekennzeichnet, dass**
- die nutzerbezogenen Daten und der anonymisierte erste Datensatz mittels der Fahrzeugrecheneinheit (6) an eine erste Serverrecheneinheit (3) des Serversystems (2) übermittelt werden;
- die übermittelten nutzerbezogenen Daten mittels der ersten Serverrecheneinheit (3) gelöscht werden; und
- der anonymisierte erste Datensatz mittels der ersten Serverrecheneinheit (3) an eine zweite Serverrecheneinheit (4) des Serversystems (2) übermittelt wird.

5. Verfahren nach Anspruch 4,
**dadurch gekennzeichnet, dass**
- der Anonymisierungsgrad mittels der zweiten Serverrecheneinheit (4) bestimmt wird; und
- der angepasste Parametersatz mittels der zweiten Serverrecheneinheit (4) erzeugt und an die Fahrzeugrecheneinheit (6) übermittelt wird.

6. Verfahren nach einem der Ansprüche 2 bis 5,
**dadurch gekennzeichnet, dass**
- der anonymisierte erste Datensatz vor dessen Übermittlung an das Serversystem (2) mittels der Fahrzeugrecheneinheit (6) verschlüsselt wird; und
- der verschlüsselte anonymisierte erste Datensatz mittels des Serversystems (2) nach dem Löschen der nutzerbezogenen Daten entschlüsselt wird.

7. Verfahren nach Anspruch 6,
**dadurch gekennzeichnet, dass**
- mittels des Serversystems (2) vor der Entschlüsselung ein Erfolg des Löschens der nutzerbezogenen Daten überprüft wird; und
- die Entschlüsselung in Abhängigkeit von einem Ergebnis der Überprüfung durchgeführt wird.

8. Verfahren nach einem der vorhergehenden Ansprüche,
**dadurch gekennzeichnet, dass**
der vorgegebene Parametersatz eine Verzögerungsdauer enthält und der anonymisierte erste Datensatz mittels der Fahrzeugrecheneinheit (6) gemäß der Verzögerungsdauer zeitverzögert an das Serversystem (2) übermittelt wird.

9. Verfahren nach einem der vorhergehenden Ansprüche,
**dadurch gekennzeichnet, dass**
mittels des Serversystems (2) basierend auf dem anonymisierten ersten Datensatz eine Gruppengröße bestimmt wird, welche einer Anzahl von Kraftfahrzeugen entspricht, auf die der anonymisierte Datensatz bezogen werden kann, und der Anonymisierungsgrad abhängig von der Gruppengröße bestimmt wird.

10. Verfahren nach einem der vorhergehenden Ansprüche,
**dadurch gekennzeichnet, dass**
- mittels des Kraftfahrzeugs (5) ein zweiter Datensatz erzeugt wird und der zweite Datensatz mittels der Fahrzeugrecheneinheit (6) basierend auf dem angepassten Parametersatz anonymisiert wird; und
- der anonymisierte zweite Datensatz mittels der Fahrzeugrecheneinheit (6) an das Serversystem (2) übermittelt wird.

11. Verfahren nach einem der vorhergehenden Ansprüche,
**dadurch gekennzeichnet, dass**
- das Kraftfahrzeug (5) Teil einer Kraftfahrzeugflotte ist, die eines oder mehrere weitere Kraftfahrzeuge enthält; und
- der angepasste Parametersatz mittels des Serversystems (2) an eine jeweilige weitere Fahrzeugrecheneinheit jedes weiteren Kraftfahrzeugs der Kraftfahrzeugflotte übermittelt wird.

12. Verfahren nach Anspruch 11,
**dadurch gekennzeichnet, dass**
- mittels jedes weiteren Kraftfahrzeugs der Kraftfahrzeugflotte ein weiterer Datensatz erzeugt wird und der jeweilige weitere Datensatz mittels der jeweiligen weiteren Fahrzeugrecheneinheit basierend auf dem angepassten Parametersatz anonymisiert wird; und
- der jeweilige anonymisierte weitere Datensatz mittels der jeweiligen weiteren Fahrzeugrecheneinheit an das Serversystem (2) übermittelt wird.

13. Serversystem zur Bereitstellung von Daten eines Kraftfahrzeugs (5), das Serversystem (2) aufweisend wenigstens eine Serverrecheneinheit (3, 4), die dazu eingerichtet ist, von dem Kraftfahrzeug (5) einen anonymisierten ersten Datensatz zu erhalten, **dadurch gekennzeichnet, dass**
die wenigstens eine Serverrecheneinheit (3, 4) dazu eingerichtet ist,
- basierend auf dem anonymisierten ersten Datensatz einen durch die Anonymisierung erreichten Anonymisierungsgrad zu bestimmen; und
- basierend auf dem Anonymisierungsgrad einen angepassten Parametersatz zu erzeugen und an das Kraftfahrzeug (5) zu übermitteln.

14. Serversystem nach Anspruch 13,
**dadurch gekennzeichnet, dass**
- die wenigstens eine Serverrecheneinheit (3, 4) eine erste Serverrecheneinheit (3) und eine zweite Serverrecheneinheit (4) beinhaltet;
- die erste Serverrecheneinheit (3) dazu eingerichtet ist, zusammen mit dem anonymisierten ersten Datensatz nutzerbezogene Daten von dem Kraftfahrzeug (5) zu erhalten, die übermittelten nutzerbezogenen Daten zu löschen und den anonymisierten ersten Datensatz an die zweite Serverrecheneinheit (4) zu übermitteln.

15. Kommunikationssystem aufweisend ein Serversystem (2) nach einem der Ansprüche 13 oder 14 sowie eine Fahrzeugrecheneinheit (6) für das Kraftfahrzeug (5), wobei die Fahrzeugrecheneinheit (6) dazu eingerichtet ist,
- einen durch das Kraftfahrzeug (5) erzeugten ersten Datensatz basierend auf einem vorgegebenen Parametersatz zu anonymisieren, um den anonymisierten ersten Datensatz zu erzeugen; und
- den anonymisierten ersten Datensatz an das Serversystem (2) zu übermitteln.

## Claims

1. A method for providing data of a motor vehicle (5), wherein
- a first dataset is generated by the motor vehicle (5) and the first dataset is anonymized by a vehicle computing unit (6) of the motor vehicle (5); and
- the anonymized first dataset is communicated to a server system (2) by the vehicle computing unit (6),
- the anonymization is performed based on a predetermined parameter set, **characterized in that**
- a degree of anonymization achieved by the anonymization is determined by the server system (2) based on the anonymized first dataset; and
- an adapted parameter set is generated based on the degree of anonymization and communicated to the vehicle computing unit (6) by the server system (2).

2. The method according to claim 1,
**characterized in that**
- user-related data is communicated to the server system (2) together with the anonymized first dataset by the vehicle computing unit (6); and
- the communicated user-related data is deleted by the server system (2).

3. The method according to claim 2,
**characterized in that**
the user-related data includes an IP address of the vehicle computing unit (6) and/or an identifier associated with the vehicle computing unit (6).

4. The method according to any one of claims 2 or 3,
**characterized in that**
- the user-related data and the anonymized first dataset are communicated to a first server computing unit (3) of the server system (2) by the vehicle computing unit (6);
- the communicated user-related data is deleted by the first server computing unit (3); and
- the anonymized first dataset is communicated to a second server computing unit (4) of the server system (2) by the first server computing unit (3).

5. The method according to claim 4,
**characterized in that**
- the degree of anonymization is determined by the second server computing unit (4); and
- the adapted parameter set is generated by the second server computing unit (4) and communicated to the vehicle computing unit (6).

6. The method according to any one of claims 2 to 5,
**characterized in that**
- the anonymized first dataset is encrypted by the vehicle computing unit (6) before communication thereof to the server system (2); and
- the encrypted anonymized first dataset is decrypted by the server system (2) after deleting the user-related data.

7. The method according to claim 6,
**characterized in that**
- before decryption, a success of deletion of the user-related data is checked by the server system (2); and
- the decryption is performed depending on a result of the checking.

8. The method according to any one of the preceding claims,
**characterized in that**
the predetermined parameter set contains a delay period and the anonymized first dataset is communicated to the server system (2) delayed in time according to the delay period by the vehicle computing unit (6).

9. The method according to any one of the preceding claims,
**characterized in that**
a group size is determined by the server system (2) based on the anonymized first dataset, which corresponds to a number of motor vehicles, to which the anonymized dataset can be related, and the degree of anonymization is determined depending on the group size.

10. The method according to any one of the preceding claims,
**characterized in that**
- a second dataset is generated by the motor vehicle (5) and the second dataset is anonymized by the vehicle computing unit (6) based on the adapted parameter set; and
- the anonymized second dataset is communicated to the server system (2) by the vehicle computing unit (6).

11. The method according to any one of the preceding claims,
**characterized in that**
- the motor vehicle (5) is part of a motor vehicle fleet, which includes one or more further motor vehicles; and
- the adapted parameter set is communicated to a respective further vehicle computing unit of each further motor vehicle of the motor vehicle fleet by the server system (2).

12. The method according to claim 11,
**characterized in that**
- a further dataset is generated by each further motor vehicle of the motor vehicle fleet and the respective further dataset is anonymized by the respective further vehicle computing unit based on the adapted parameter set; and
- the respective anonymized further dataset is communicated to the server system (2) by the respective further vehicle computing unit.

13. A server system for providing data of a motor vehicle (5), the server system (2) comprising at least one server computing unit (3, 4), which is configured to obtain an anonymized first dataset from the motor vehicle (5),
**characterized in that**
the at least one server computing unit (3, 4) is configured
- to determine a degree of anonymization achieved by the anonymization based on the anonymized first dataset; and
- to generate an adapted parameter set based on the degree of anonymization and to communicate it to the motor vehicle (5).

14. The server system according to claim 13,
**characterized in that**
- the at least one server computing unit (3, 4) includes a first server computing unit (3) and a second server computing unit (4);
- the first server computing unit (3) is configured to obtain user-related data from the motor vehicle (5) together with the anonymized first dataset, to delete the communicated user-related data and to communicate the anonymized first dataset to the second server computing unit (4).

15. A communication system comprising a server system (2) according to one of claims 13 or 14 as well as a vehicle computing unit (6) for the motor vehicle (5), wherein the vehicle computing unit (6) is configured
- to anonymize a first dataset generated by the motor vehicle (5) based on a predetermined parameter set to generate the anonymized first dataset; and
- to communicate the anonymized first dataset to the server system (2).

## Revendications

1. Procédé de fourniture de données provenant d'un véhicule automobile (5), dans lequel
- un premier ensemble de données est généré au moyen du véhicule automobile (5) et le premier ensemble de données est anonymisé au moyen d'une unité informatique (6) du véhicule automobile (5) ; et
- le premier ensemble de données anonymisé est transmis à un système serveur (2) au moyen de l'unité informatique (6) du véhicule,
- l'anonymisation est effectuée sur la base d'un ensemble de paramètres prédéfini, **caractérisé en ce que**
- un degré d'anonymisation atteint par l'anonymisation est déterminé au moyen du système serveur (2) sur la base du premier ensemble de données anonymisé ; et
- un ensemble de paramètres adapté est généré au moyen du système serveur (2) sur la base du degré d'anonymisation et est transmis à l'unité informatique (6) du véhicule.

2. Procédé selon la revendication 1,
**caractérisé en ce que**
- des données relatives à l'utilisateur sont transmises au système serveur (2) au moyen de l'unité informatique (6) du véhicule en même temps que le premier ensemble de données anonymisé ; et
- les données relatives à l'utilisateur transmises sont effacées au moyen du système serveur (2).

3. Procédé selon la revendication 2,
**caractérisé en ce que**
les données relatives à l'utilisateur comprennent une adresse IP de l'unité informatique (6) du véhicule et/ou un identifiant attribué à l'unité informatique (6) du véhicule.

4. Procédé selon l'une des revendications 2 ou 3, **caractérisé en ce que**
- les données relatives à l'utilisateur et le premier ensemble de données anonymisé sont transmis au moyen de l'unité informatique (6) du véhicule à une première unité informatique (3) du serveur du système serveur (2) ;
- les données relatives à l'utilisateur transmises sont effacées au moyen de la première unité informatique (3) du serveur ; et
- le premier ensemble de données anonymisé est transmis au moyen de la première unité informatique (3) du serveur à une deuxième unité informatique (4) du serveur du système serveur (2).

5. Procédé selon la revendication 4,
**caractérisé en ce que**
- le degré d'anonymisation est déterminé au moyen de la deuxième unité informatique (4) du serveur ; et
- l'ensemble de paramètres adapté est généré au moyen de la deuxième unité informatique (4) du serveur et transmis à l'unité informatique (6) du véhicule.

6. Procédé selon l'une des revendications 2 à 5,
**caractérisé en ce que**
- le premier ensemble de données anonymisé est crypté au moyen de l'unité informatique (6) du véhicule avant sa transmission au système serveur (2) ; et
- le premier ensemble de données anonymisé crypté est décrypté au moyen du système serveur (2) après l'effacement des données relatives à l'utilisateur.

7. Procédé selon la revendication 6,
**caractérisé en ce que**
- avant le décryptage, un succès de l'effacement des données relatives à l'utilisateur est vérifié au moyen du système serveur (2) ; et
- le décryptage est effectué en fonction d'un résultat de la vérification.

8. Procédé selon l'une des revendications précédentes,
**caractérisé en ce que**
l'ensemble de paramètres prédéfini contient une durée de temporisation et le premier ensemble de données anonymisé est transmis au système serveur (2) au moyen de l'unité informatique (6) du véhicule avec une temporisation conforme à la durée de temporisation.

9. Procédé selon l'une des revendications précédentes,
**caractérisé en ce que**
au moyen du système serveur (2), il est déterminé, sur la base du premier ensemble de données anonymisé, une taille de groupe qui correspond à un nombre de véhicules automobiles auquel l'ensemble de données anonymisé est apte à se rapporter, et on détermine le degré d'anonymisation en fonction de la taille du groupe.

10. Procédé selon l'une des revendications précédentes,
**caractérisé en ce que**
- un deuxième ensemble de données est généré au moyen du véhicule automobile (5) et le deuxième ensemble de données est anonymisé au moyen de l'unité informatique (6) du véhicule sur la base de l'ensemble de paramètres adapté ; et
- le deuxième ensemble de données anonymisé est transmis au système serveur (2) au moyen de l'unité informatique (6) du véhicule.

11. Procédé selon l'une des revendications précédentes,
**caractérisé en ce que**
- le véhicule automobile (5) fait partie d'une flotte de véhicules automobiles qui comprend un ou plusieurs autres véhicules automobiles ; et
- l'ensemble de paramètres adapté est transmis au moyen du système serveur (2) à une autre unité informatique de véhicule respective de chaque autre véhicule automobile de la flotte de véhicules automobiles.

12. Procédé selon la revendication 11,
**caractérisé en ce que**
- un autre ensemble de données est généré au moyen de chaque autre véhicule automobile de la flotte de véhicules et ledit autre ensemble de données respectif est anonymisé au moyen de ladite autre unité informatique de véhicule respective sur la base de l'ensemble de paramètres adapté ; et
- ledit autre ensemble de données anonymisé respectif est transmis au système serveur (2) au moyen de l'autre unité informatique de véhicule respective.

13. Système serveur pour la fourniture de données provenant d'un véhicule automobile (5), le système serveur (2) présentant au moins une unité informatique (3, 4) de serveur, qui est conçue de façon à obtenir du véhicule automobile (5) un premier ensemble de données anonymisé, **caractérisé en ce que**
ladite au moins une unité informatique de serveur (3, 4) est conçue de façon
- à déterminer, sur la base du premier ensemble de données anonymisé, un degré d'anonymisation obtenu par l'anonymisation ; et
- à générer, sur la base du degré d'anonymisation, un ensemble de paramètres adapté et à le transmettre au véhicule automobile (5).

14. Système serveur selon la revendication 13, **caractérisé en ce que**
- ladite au moins une unité informatique (3, 4) de serveur comprend une première unité informatique (3) du serveur et une deuxième unité informatique (4) du serveur ;
- la première unité informatique (3) du serveur est conçue pour recevoir, avec le premier ensemble de données anonymisé, des données relatives à l'utilisateur provenant du véhicule automobile (5), pour effacer les données relatives à l'utilisateur transmises et pour transmettre le premier ensemble de données anonymisé à la deuxième unité informatique (4) du serveur.

15. Système de communication comprenant un système serveur (2) selon l'une des revendications 13 ou 14, ainsi qu'une unité informatique (6) du véhicule automobile (5), l'unité informatique (6) du véhicule étant agencée pour
- anonymiser un premier ensemble de données généré par le véhicule automobile (5) sur la base d'un ensemble de paramètres prédéterminé afin de générer le premier ensemble de données anonymisé ; et
- transmettre le premier ensemble de données anonymisé au système serveur (2).
